# DEMANDE DE BREVET EUROPEEN

(11) **EP 0 762 161 A1**
(43) Date de publication de la demande: **12.03.1997**
(21) Numéro de dépôt: 96401856.8
(22) Date de dépôt: 29.08.1996
(51) Int. Cl.: G02B 6/293, H04J 14/02

(54) **Composant optique adapté à la surveillance d'une liaison multilongueur d'onde et multiplexeur à insertion-extraction utilisant ce composant, application aux réseaux optiques**

(30) Priorité: 01.09.1995 FR 9510302
(71) Demandeur: FRANCE TELECOM, 75015 Paris (FR)
(72) Inventeur: Hamel, André, 22300 Lannion (FR); Laville, Daniel, 22700 Perros Guirec (FR)
(74) Mandataire: Dubois-Chabert, Guy

(57) **Abrégé**

Ce composant comprend une fibre (68) transmettant des signaux de longueurs d'onde différentes, un réseau de diffraction (70) dispersant ces signaux sur plusieurs ordres de diffraction, des fibres (72 à 78) récupérant des signaux ainsi dispersés, correspondant à un ordre de diffraction donné, et des fibres (79 à 84) récupérant les mêmes signaux mais correspondant à un autre ordre de diffraction, pour contrôler l'état de ces signaux.

## Description

### DOMAINE TECHNIQUE

La présente invention concerne un composant optique adapté à la surveillance d'une liaison multilongueur d'onde ainsi qu'un multiplexeur à insertion-extraction *("add-drop multiplexer"* utilisant ce composant.

Elle s'applique notamment au domaine des télécommunications optiques et, tout particulièrement, aux réseaux optiques en anneau *("optical ring network").*

### ÉTAT DE LA TECHNIQUE ANTÉRIEURE

Grâce à l'introduction de la norme appelée "Hiérarchie Numérique Synchrone", les architectures de transmission en anneau présentent un intérêt économique et une bonne fiabilité.

Cette norme de transmission a introduit la notion de trame pour transmettre l'information.

Dans chaque trame, un espace est réservé au transport des indications concernant la qualité de la transmission et les alarmes qui sont élaborées dans chaque équipement d'un réseau utilisant cette norme.

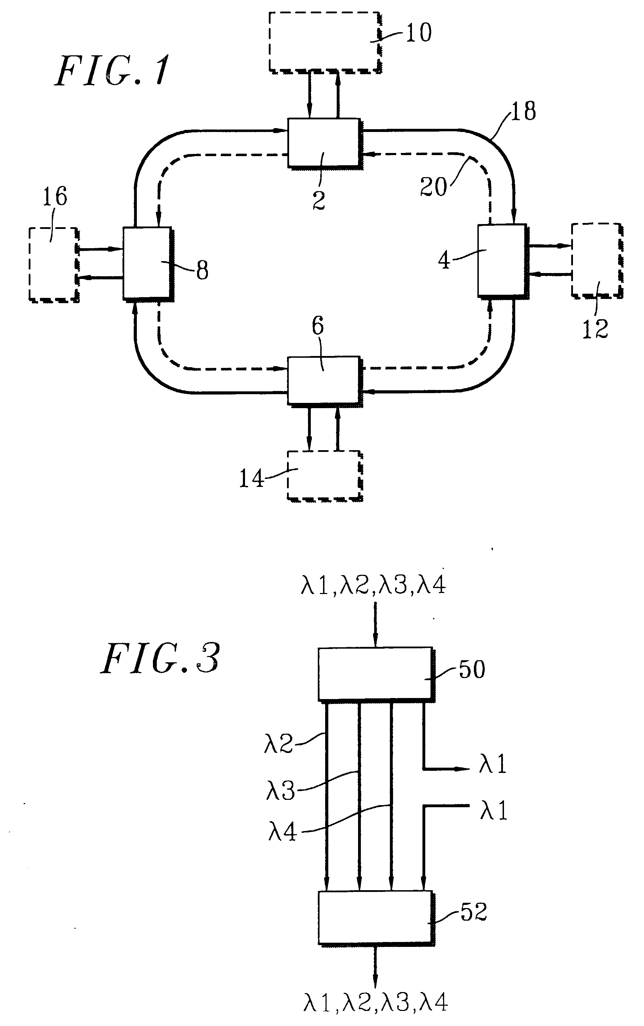

Un exemple d'un tel réseau est schématiquement représenté sur la figure 1.

Des équipements électroniques 2, 4, 6 et 8 (multiplexeurs à insertion-extraction électroniques) sont installés aux différents noeuds du réseau.

Le multiplexeur 2, qui est installé dans le noeud principal du réseau, est destiné à échanger des informations avec un autre réseau 10.

Les autres multiplexeurs 4, 6 et 8 sont destinés à échanger des informations respectivement avec des utilisateurs 12, 14 et 16.

Dans le réseau de la figure 1, les informations sont transmises dans un seul sens grâce à des fibres optiques qui assurent la jonction entre les différents noeuds du réseau et forment une boucle ou anneau.

Avec la structure du réseau en anneau qui est représenté sur la figure 1, chaque section de transmission est surveillée par un multiplexeur.

Les informations sont acheminées au noeud principal 2 en lequel les moyens (non représentés) de gestion du réseau en anneau peuvent connaître à tout instant la qualité de la transmission sur chaque section de ce réseau.

Cela permet de localiser un défaut sur le réseau.

On voit également sur la figure 1 une boucle à fibres optiques 20 qui relie les différents noeuds du réseau et qui constitue une boucle de secours permettant de transmettre les informations, en sens contraire à celui de la boucle 18, même en cas de rupture de cette boucle 18.

Les techniques de multiplexage optique ont déjà été appliquées à une architecture de réseau en anneau.

On consultera à ce sujet les documents (1) et (2) qui, comme les autres documents cités par la suite, sont mentionnés à la fin de la présente description.

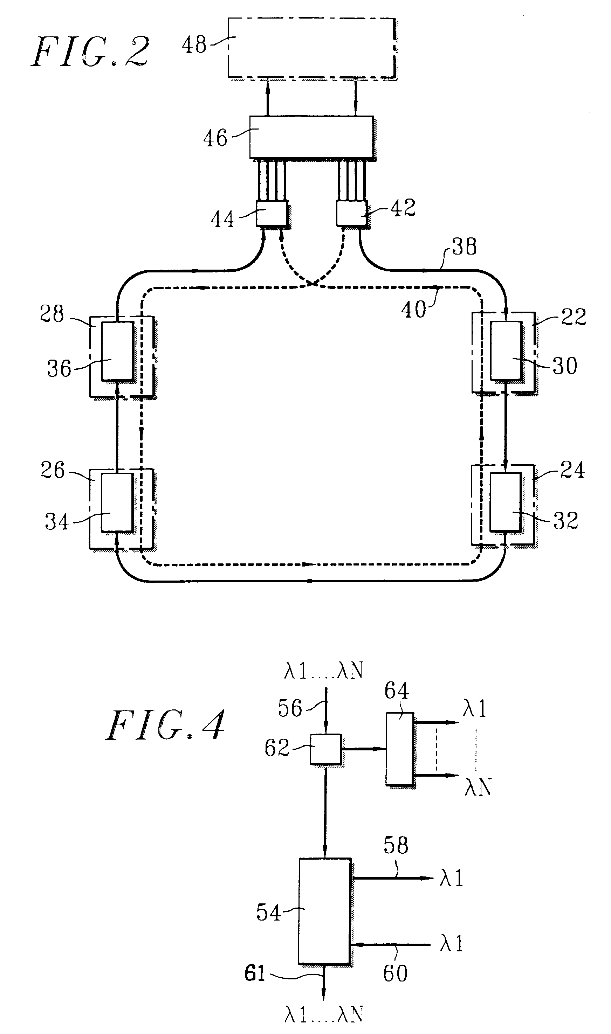

La figure 2 représente de façon schématique un réseau en anneau unidirectionnel avec routage spectral.

Dans le réseau en anneau de la figure 2, les noeuds du réseau 22, 24, 26 et 28 sont respectivement munis de multiplexeurs optiques 30, 32, 34 et 36.

Chaque multiplexeur assure une fonction d'insertion-extraction de signaux à une longueur d'onde donnée.

Dans ce réseau de la figure 2, la continuité optique est assurée le long d'une boucle unidirectionnelle à fibres optiques 38 appelée boucle normale.

Les informations sont envoyées dans un sens donné sur cette boucle normale et également en sens contraire sur une autre boucle à fibres optiques 40 qui forme une boucle de secours pour garantir la transmission même en cas de rupture simple d'artère.

On voit également sur la figure 2 des moyens d'émission 42 et des moyens de réception 44 dont est muni le réseau.

Ces moyens 42 et 44 communiquent avec la tête de réseau 46 par laquelle transitent toutes les informations et qui assure une fonction de brassage.

Le réseau en anneau de la figure 2 communique avec un autre réseau 48 appelé "réseau de transmission", par l'intermédiaire de la tête de réseau 46.

Chaque noeud du réseau de la figure 2 communique avec un usager, ce que l'on a symbolisé par une double flèche.

Les informations destinées à un noeud donné sont transportées par un signal à une longueur d'onde donnée.

Par exemple, les informations destinées au noeud 22 sont transportées par un signal à une longueur λ1 et sont dirigées optiquement par le multiplexeur à insertion-extraction optique *("optical add-drop multiplexer")* associé 30, qui est centré sur cette longueur d'onde λ1.

Les multiplexeurs à insertion-extraction optiques sont donc des composants-clés des réseaux en anneau, avec routage spectral.

Dans le réseau de la figure 2, si le signal de longueur d'onde λ1 est totalement extrait, c'est-à-dire si le signal résiduel dans la boucle après extraction est suffisamment faible, les informations de retour vers la tête de réseau 46 peuvent utiliser la même longueur d'onde λ1.

Il existe donc une possibilité de réutilisation des longueurs d'onde dans ce réseau en anneau de la figure 2.

Un tel réseau en anneau comprenant N noeuds ou stations nécessite dans ce cas N longueurs d'onde.

Dans un réseau en anneau multilongueur d'onde du genre de celui qui est représenté schématiquement sur la figure 2, les informations qui sont transmises à la longueur d'onde λ4 et sont destinées au noeud 28 ne sont pas surveillées pendant la transmission sur les quatre premières sections que comprend cet anneau de la figure 2.

Plusieurs technologies optiques sont adaptées à la réalisation d'un multiplexeur à insertion-extraction optique.

Les dispositifs commercialement disponibles qui permettent de séparer des longueurs d'onde sont des composants à réseaux de diffraction *("diffraction gratings")* ou des composants à filtres multidiélectriques.

On connaît des composants qui sont fabriqués par la société Jobin Yvon et qui permettent de séparer de quatre à vingt canaux.

Les pertes d'insertion se situent dans le domaine de 2,5 dB à 4 dB pour un composant unique.

Il est possible de réaliser une extraction puis une insertion par un montage dos à dos de deux composants, comme le mentionne le document (3), mais tous les canaux subissent les mêmes pertes d'insertion (de l'ordre de 5 à 6 dB).

Chaque canal a une fonction de transfert passe-bande qui est relativement étroite et l'allure de cette fonction de transfert est de type sinusoïdal.

Ainsi, les pertes sont minimales à la longueur d'onde centrale et augmentent lorsque l'on s'écarte de cette dernière.

Dans l'état actuel de la technologie, la largeur à mi-hauteur de la courbe représentative de la fonction de transfert est de 0,8 nm pour une distance entre canaux de 4 nm.

Cette caractéristique nécessite un positionnement précis de la longueur d'onde des sources d'un réseau utilisant un tel composant.

Un multiplexeur à insertion-extraction optique peut être réalisé au moyen de deux filtres multi-diélectriques passe-bande comme le mentionne le document (4) .

La caractérisitique de transmission est utilisée pour l'extraction d'une longueur d'onde donnée tandis que la caractéristique de réflexion est utilisée pour diriger toutes les longueurs d'onde en transit vers la sortie.

L'utilisation de ces filtres est intéressante pour des anneaux de petite taille où une seule longueur d'onde ou du moins au maximum deux longueurs d'onde sont traitées par un noeud du réseau car les pertes d'insertion sont faibles (1,5 dB au maximum).

L'utilisation d'un réseau de diffraction pour réaliser un multiplexeur à insertion-extraction optique est présentée par exemple dans le document (1).

Cette utilisation est bien adaptée à un anneau de grande taille (comprenant une dizaine de noeuds) avec plusieurs longueurs d'onde par noeud.

Les pertes d'insertion plus élevées sont indépendantes du nombre de canaux.

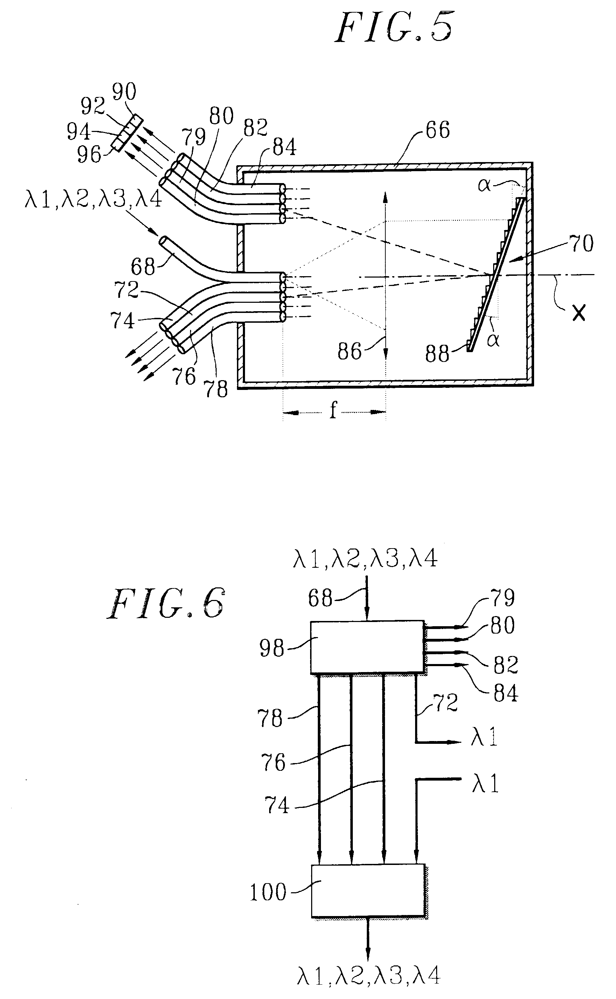

La figure 3 illustre schématiquement un multiplexeur à insertion-extraction optique comprenant deux composants 50 et 52 qui sont montés dos à dos et comprennent chacun un réseau de diffraction.

Le multiplexeur de la figure 3 reçoit des signaux de longueurs d'onde différentes, quatre longueurs d'onde λ1, λ2, λ3 et λ4 dans l'exemple de la figure 3.

Le composant 50 permet l'extraction du signal de longueur d'onde λ1 et le composant 52 permet l'insertion d'un signal de longueur d'onde λ1 parmi les signaux restants, de longueurs d'onde λ2, λ3 et λ4, pour retrouver à la sortie du multiplexeur un mélange de signaux de longueurs d'onde respectives λ1, λ2, λ3 et λ4.

Dans une variante de réalisation non représentée, on insère un commutateur optique entre les composants à réseau 50 et 52, ce qui permet de modifier la connexion des voies du multiplexeur à réseau et d'obtenir un multiplexeur à insertion-extraction optique reconfigurable.

Les multiplexeurs à insertion-extraction optiques à réseau de diffraction s'appliquent tout particulièrement aux réseaux en anneau de grande capacité (plusieurs longueurs d'onde).

On peut avoir recours à l'amplification optique pour accroître la portée des sections d'un tel réseau en anneau et compenser les pertes des multiplexeurs à insertion-extraction optiques du réseau.

Pour surveiller les sections d'un réseau en anneau multilongueur d'onde, il est connu de prélever, au moyen d'un coupleur optique, un faible pourcentage de puissance avant et éventuellement après un multiplexeur à insertion-extraction optique à chaque noeud du réseau en anneau et d'analyser le spectre optique obtenu.

Ceci est schématiquement illustré par la figure 4 où l'on voit un multiplexeur à insertion-extraction optique 54.

L'entrée 56 de celui-ci reçoit des signaux de longueurs d'onde respectives λ1 ... λN.

Ce multiplexeur permet d'extraire de ces signaux un signal de longueur d'onde donnée, par exemple λ1, qui est obtenu à la sortie d'extraction 58 du multiplexeur.

Ce dernier permet également d'insérer parmi les signaux non extraits un signal de longueur d'onde λ1 par l'entrée d'insertion 60 du multiplexeur.

A la sortie 61 de celui-ci, on a un ensemble de signaux de longueurs d'onde respectives λ1 ... λN.

On voit sur la figure 4 qu'un coupleur optique 62 est monté à l'entrée 56 du multiplexeur.

Ce coupleur 62 permet d'extraire une partie des signaux incidents de longueurs d'onde respectives λ1 ... λN.

Un moyen de démultiplexage 64, qui est monté à la suite du coupleur 62, permet la séparation des signaux ainsi extraits en vue de les analyser.

Une telle façon de procéder entraîne des pertes supplémentaires dans le bilan de liaison, à cause des pertes dues au coupleur optique, et nécessite un composant optique -le moyen de démultiplexage 64-pour séparer les canaux.

### EXPOSÉ DE L'INVENTION

La présente invention a pour but de remédier aux inconvénients précédents.

L'invention permet de surveiller chaque section d'un réseau multilongueur d'onde en anneau dans le cas particulier où les multiplexeurs à insertion-extraction optiques de ce réseau utilisent un réseau de diffraction.

L'invention est un composant à réseau de diffraction utilisable dans un multiplexeur à insertion-extraction optique.

Ce composant est fondé sur la propriété de dispersion angulaire d'un réseau de diffraction sur plusieurs ordres de diffraction.

Cela signifie qu'un signal optique monochromatique placé à l'entrée du réseau de diffraction sera réparti sur plusieurs sorties.

En pratique, pour avoir de bonnes performances, notamment dans les applications à la transmission optique, on utilise des réseaux de diffraction conçus pour concentrer la plus grande partie de la puissance d'entrée sur un seul ordre de diffraction.

De tels réseaux de diffraction sont appelés réseaux blazés *("blazed gratings")* et l'on obtient en pratique des efficacités de 85 à 90% comme le mentionne le document (5).

Le complément d'énergie est réparti sur les autres ordres de diffraction du réseau et, dans les composants connus à réseau de diffraction, ce complément d'énergie est perdu dans l'assemblage optique contenant le réseau de diffraction.

La présente invention utilise au contraire la lumière correspondant à un ordre de diffraction non utilisé pour obtenir les signaux de sortie du composant.

De préférence, l'invention utilise la lumière qui correspond à un ordre de diffraction secondaire.

Cette lumière permet de contrôler l'état des canaux optiques dans une section de transmission d'un réseau en anneau.

L'invention n'apporte aucun changement aux performances en transmission du composant à réseau de diffraction.

L'invention s'applique aux liaisons point à point multilongueurs d'onde sur fibres optiques et de manière privilégiée aux réseaux en anneau de grande capacité qui sont adaptés à l'utilisation des réseaux de diffraction.

Etant donné que ces réseaux en anneau transportent un trafic élevé, il est important de pouvoir surveiller le flux transmis sur chaque section du réseau.

De façon précise, la présente invention a tout d'abord pour objet un composant optique comprenant :
- une fibre optique d'entrée destinée à transmettre des signaux optiques de longueurs d'onde différentes les unes des autres,
- un réseau de diffraction destiné à disperser angulairement chacun de ces signaux sur plusieurs ordres de diffraction, et
- un premier ensemble de fibres optiques qui sont destinées à récupérer respectivement des signaux ainsi dispersés, ayant des longueurs d'onde différentes les unes des autres et correspondant à un ordre de diffraction donné, en vue de transmettre ces signaux,
ce composant étant caractérisé en ce qu'il comprend en outre un deuxième ensemble de fibres optiques qui sont destinées à récupérer respectivement les mêmes signaux que ceux qui sont récupérés par les fibres du premier ensemble mais correspondant à un autre ordre de diffraction, en vue de contrôler l'état de ces signaux récupérés.

De préférence, le réseau de diffraction est un réseau plan blazé.

Selon un mode de réalisation préféré du composant objet de l'invention, ce réseau plan est blazé dans le premier ordre et les fibres optiques du premier ensemble sont destinées à récupérer des signaux correspondant au premier ordre de diffraction.

De préférence, ce réseau plan blazé est utilisé en configuration de Littrow.

L'invention concerne également un multiplexeur à insertion-extraction optique, comprenant :
- un premier composant optique qui est destiné à séparer des signaux optiques incidents, de longueurs d'onde différentes les unes des autres, en vue d'extraire l'un de ces signaux, et
- un deuxième composant optique destiné à mélanger les signaux séparés, sauf celui qui a été extrait, et à insérer parmi ces signaux mélangés un autre signal optique ayant la même longueur d'onde que celui qui a été extrait,
ce multiplexeur étant caractérisé en ce que le premier composant optique est conforme au composant optique objet de la présente invention.

Comme on l'a vu plus haut, ce multiplexeur s'applique aux réseaux optiques en anneau.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1, déjà décrite, représente de façon schématique un réseau en anneau unidirectionnel utilisant une technologie électronique,
- la figure 2, déjà décrite, représente schématiquement un réseau en anneau unidirectionnel à routage spectrale,
- la figure 3, déjà décrite, représente schématiquement un multiplexeur à insertion-extraction optique à réseau de diffraction,
- la figure 4, déjà décrite, représente schématiquement un multiplexeur à insertion-extraction optique à l'entrée duquel on extrait une partie des signaux incidents afin de les analyser,
- la figure 5 est une vue en coupe schématique d'un mode de réalisation particulier du composant optique objet de l'invention, et
- la figure 6 est une vue schématique d'un multiplexeur à insertion-extraction optique utilisant le composant de la figure 5.

### EXPOSÉ DÉTAILLÉ DE MODES DE RÉALISATION PARTICULIERS

Le composant optique conforme à l'invention, qui est schématiquement représenté sur la figure 5, comprend dans un boîtier 66 :
- une fibre optique d'entrée 68 dans laquelle se propagent N signaux optiques de longueurs d'onde différentes les unes des autres λ1, λ2, ..., λN, N étant égal à 4 dans l'exemple représenté sur la figure 5,
- un réseau de diffraction 70 destiné à disperser angulairement chacun de ces signaux sur plusieurs ordres de diffraction, et
- un ensemble de N fibres optiques qui ont les références 72, 74, 76 et 78 et qui sont destinées à récupérer respectivement les signaux ainsi dispersés et correspondant à un ordre de diffraction donné, en vue de transmettre ces signaux à d'autres composants non représentés sur la figure 5.

Conformément à la présente invention, le composant de la figure 5 comprend en outre, dans le boîtier 66, un autre ensemble de N fibres optiques qui ont les références 79, 80, 82 et 84 et qui sont destinées à récupérer respectivement les mêmes signaux que ceux qui sont récupérés par les fibres 72, 74, 76 et 78 mais correspondant à un autre ordre de diffraction, en vue de contrôler l'état de ces signaux récupérés.

Dans l'exemple représenté sur la figure 5, le réseau de diffraction 70 est un réseau plan.

Dans ce cas, le composant comprend en outre, dans le boîtier 66, une optique de collimation 86 dont l'axe optique porte la référence X sur la figure 5.

Dans un autre mode de réalisation particulier, on pourrait utiliser non pas un réseau de diffraction plan mais un réseau de diffraction concave qui ne nécessiterait pas d'optique de collimation.

En revenant à la figure 5, des extrémités respectives des fibres 68, 72 à 78 et 79 à 84 se trouvent dans le boîtier 66 et ces extrémités sont coplanaires et les axes de ces extrémités sont parallèles à l'axe X.

De plus, les faces d'extrémité correspondantes des fibres se trouvent toutes dans un même plan focal de l'optique 86 et sont donc placées à la distance focale f de celle-ci.

L'extrémité de la fibre optique d'entrée, qui se trouve dans le boîtier 66, est située sur l'axe X.

Chacune des autres extrémités placées dans le boîtier 66 est convenablement disposée de façon à recevoir la lumière qui lui est destinée.

Bien entendu, les ouvertures numériques des fibres sont convenablement choisies pour que chacune de ces fibres reçoive la lumière qui lui est destinée et qui correspond à la diffraction dans un ordre déterminé, par le réseau 70, de la lumière issue de la fibre 68.

Dans l'exemple représenté, le réseau 70 est un réseau plan blazé dans le premier ordre et utilisé en configuration de Littrow.

Un tel choix permet d'obtenir les pertes d'insertion les plus faibles pour des applications en transmission sur fibre optique.

Dans ce cas, le réseau 70, qui est vu en coupe sur la figure 5, comprend, comme tout réseau de diffraction, un ensemble de traits parallèles.

Dans le cas d'un réseau blazé, ces traits ont, vus en coupe, la forme de marches adjacentes qui reposent sur le support plan 88 du réseau 70.

Chaque marche fait l'angle de blaze α avec ce support 88 sur lequel elle repose.

De plus, compte tenu du choix de la configuration de Littrow, le support plan 88 fait l'angle de blaze α avec un plan perpendiculaire à l'axe X, comme on le voit sur la figure 5.

Les fibres 72 à 78 ou fibres de transmission reçoivent respectivement les signaux de longueurs d'onde λ1 à λ4 diffractés dans l'ordre 1.

Conformément à l'invention, les autres fibres ou fibres de contrôle 79 à 84 sont respectivement prévues pour récupérer les signaux de longueur d'onde λ1 à λ4 diffractés dans un ordre supérieur, l'ordre 2 par exemple.

Les propriétés optiques d'un réseau de diffraction sont exposées par exemple dans le document (5).

Un réseau à 150 traits par millimètre correspond par exemple à des applications de démultiplexage optique à 1,5 µm.

Par les relations mathématiques que l'on trouve dans ce document (5) on obtient un angle de blaze α de 4,3°.

Dans ces conditions, les faisceaux diffractés dans l'ordre 2 vers les fibres optiques de contrôle font un angle de l'ordre de 8,7° avec l'axe optique X.

En fait, les paramètres de la configuration choisie (nombre de traits par millimètre, angle de blaze, distance focale) dépendent des caractéristiques choisies pour le composant optique (distance entre canaux de longueur d'onde, bande passante d'une voie).

De plus, les relations développées dans le document (5) montrent que la dispersion angulaire est plus élevée pour les fibres de contrôle (diffraction à l'ordre 2) que pour les fibres de transmission 72 à 78.

De ce fait, si une longueur d'onde s'écarte de sa valeur nominale, la dérive de longueur d'onde est plus rapide au niveau des fibres de contrôle qu'au niveau des fibres de transmission.

Cette propriété est utilisable dans un réseau en anneau, par exemple du genre de celui de la figure 2, lorsqu'on utilise dans les noeuds de ce réseau des multiplexeurs à insertion-extraction optiques du genre de celui de la figure 5, pour apprécier une dérive des longueurs d'onde avant que cette dérive n'entraîne une rupture de la transmission.

Dans ce cas, on place des photodétecteurs 90, 92, 94 et 96 respectivement en regard des autres extrémités des fibres de contrôle pour connaître le niveau de puissance moyenne qui sort de ces extrémités.

Le seuil de détection minimale du signal est de -34 dBm selon la recommandation G957 de l'Union Internationale des Télécommunications pour une transmission de type STM1.

Pour une efficacité de diffraction de 3% dans l'ordre 2, les pertes d'insertion de la voie de contrôle sont d'environ 15 dB.

Le niveau de puissance moyenne détectée sur chaque canal de la voie de contrôle est d'environ -49 dBm au niveau du noeud ou station 22 du réseau de la figure 2.

Il est possible de comparer ce niveau à un seuil pour élaborer un signal d'alarme lorsque le niveau devient inférieur à ce seuil.

Ce signal d'alarme est alors transmis aux moyens de gestion du réseau dans le surdébit de la voie injectée dans chaque noeud de ce réseau.

La figure 6 est une vue schématique d'un multiplexeur à insertion-extraction optique conforme à l'invention, utilisant le composant de la figure 5.

Plus précisément, le composant que l'on vient de décrire en faisant référence à la figure 5 porte la référence 98 sur la figure 6 et reçoit en entrée (par la fibre 68) des signaux de longueurs d'onde respectives λ1, λ2, λ3 et λ4.

Ce composant 98 fournit, par les fibres optiques 79, 80, 82 et 84, des signaux de contrôle de longueurs d'onde respectives λ1, λ2, λ3 et λ4.

Dans l'exemple représenté sur la figure 6, le signal de longueur d'onde λ1, fourni par la fibre 79, est extrait.

Les autres signaux de longueurs d'onde λ2, λ3 et λ4 sont envoyés à l'entrée de moyens de couplage optique 100 que comprend le multiplexeur de la figure 6.

Ces moyens de couplage optique 100 reçoivent également en entrée un signal de longueur d'onde λ1 constituant le signal à insérer et les moyens 100 fournissent en sortie un mélange de signaux de longueurs d'onde respectives λ1, λ2, λ3 et λ4.

On obtient ainsi un multiplexeur à insertion-extraction optique à réseau de diffraction qui permet un contrôle des longueurs d'onde à l'entrée.

On notera que la présente invention permet un contrôle des canaux au niveau des noeuds d'un réseau en anneau, au moyen des composants qui sont déjà installés sur ce réseau mais que l'on modifie en ajoutant à chacun un ensemble de fibres, ce qui correspond à un surcoût très faible et n'entraîne aucune perte supplémentaire pour le bilan de liaison en transmission.

Les documents cités dans la présente description sont les suivants :
(1) "Multiwavelength survivable ring network architectures", A.F. ELREFAIE, Bellcore ICC 93
(2) "A fully transparent fiber optic ring architecture for WDM Networks", M.I. IRSHID, M. KAVEHRAD, Journal of Ligthwave Technology, vol.10, n°1, janvier 92
(3) A.F. Elrefaie et al., "Fibre amplifiers in closed ring WDM networks", Electron. Lett., vol.28, pp 2340 à 2341, 1992
(4) A. Hamel, D. Laville, et al., "Multilayer Add-Drop Multiplexers in a self-healing WDM Ring Network", OFC95, pp 84 et 85
(5) J.P. Laude, "Le multiplexage en longueur d'onde", Masson, pp 39 à 50

## Revendications

1. Composant optique comprenant :
• une fibre optique d'entrée (68) destinée à transmettre des signaux optiques de longueurs d'onde différentes les unes des autres,
• un réseau de diffraction (70) destiné à disperser angulairement chacun de ces signaux sur plusieurs ordres de diffraction, et
• un premier ensemble de fibres optiques (72, 74, 76, 78) qui sont destinées à récupérer respectivement des signaux ainsi dispersés, ayant des longueurs d'onde différentes les unes des autres et correspondant à un ordre de diffraction donné, en vue de transmettre ces signaux,
ce composant étant caractérisé en ce qu'il comprend en outre un deuxième ensemble de fibres optiques (79, 80, 82, 84) qui sont destinées à récupérer respectivement les mêmes signaux que ceux qui sont récupérés par les fibres du premier ensemble mais correspondant à un autre ordre de diffraction, en vue de contrôler l'état de ces signaux récupérés.

2. Composant selon la revendication 1, caractérisé en ce que le réseau de diffraction (70) est un réseau plan blazé.

3. Composant selon la revendication 2, caractérisé en ce que ce réseau plan (70) est blazé dans le premier ordre et en ce que les fibres optiques (72, 74, 76, 78) du premier ensemble sont destinées à récupérer des signaux correspondant au premier ordre de diffraction.

4. Composant selon la revendication 3, caractérisé en ce que ce réseau plan blazé (70) est utilisé en configuration de Littrow.

5. Multiplexeur à insertion-extraction optique, comprenant :
• un premier composant optique (98) qui est destiné à séparer des signaux optiques incidents, de longueurs d'onde différentes les unes des autres, en vue d'extraire l'un de ces signaux, et
• un deuxième composant optique (100) destiné à mélanger les signaux séparés, sauf celui qui a été extrait, et à insérer parmi ces signaux mélangés un autre signal optique ayant la même longueur d'onde que celui qui a été extrait,
ce multiplexeur étant caractérisé en ce que le premier composant optique (98) est conforme au composant optique selon l'une quelconque des revendications 1 à 4.

6. Application du composant optique selon l'une quelconque des revendications 1 à 4 aux réseaux optiques en anneau.

7. Application du composant optique selon l'une quelconque des revendications 1 à 4 aux liaisons point à point multilongueurs d'onde sur fibres optiques.
